# EUROPÄISCHE PATENTSCHRIFT

(11) **EP 2 217 817 B1**
(45) Veröffentlichungstag und Bekanntmachung des Hinweises auf die Patenterteilung: **24.07.2013**
(21) Anmeldenummer: 08855453.0
(22) Anmeldetag: 22.10.2008
(51) Int. Cl.: F16C 19/34, F16C 19/52, F16C 41/00

(54) **WÄLZLAGER MIT EINER BREMSEINRICHTUNG**
ROLLING BEARING WITH BRAKE MECHANISM
ROULEMENT ÉQUIPÉ D'UN SYSTÈME DE FREINAGE

(30) Priorität: 30.11.2007 DE 102007057780
(43) Veröffentlichungstag der Anmeldung: 18.08.2010
(73) Patentinhaber: Schaeffler Technologies AG & Co. KG, 91074 Herzogenaurach (DE)
(72) Erfinder: NUISSL, Christian, 90439 Nürnberg (DE); STÖLZLE, Jürgen, 91056 Erlangen (DE)
(86) Internationale Anmeldenummer: PCT/EP2008/064298
(87) Internationale Veröffentlichungsnummer: WO 2009/068375

(56) Entgegenhaltungen:
- EP-A1- 0 222 312
- DE-A1- 10 127 487
- US-A1- 2002 153 785

## Beschreibung

Die Erfindung betrifft ein Wälzlager mit einer Bremseinrichtung, insbesondere Drehverbindung, bestehend aus einem Lageraußenring und einem Lagerinnenring, zwischen denen auf zugehörigen Laufbahnen Wälzkörper abrollen, wobei zur Erzeugung einer Bremswirkung durch Reibschluss ein mit einem der Lagerringe verbundenes verschiebbares Bremselement gegen eine mit dem zugehörigen anderen Lagerring verbundene Gegenfläche gepresst ist und der Reibschluss mit Hilfe eines Elektromagneten aufhebbar ist.

### Hintergrund der Erfindung

Wälzlager mit Bremseinrichtungen sind bereits seit längerem bekannt. So besteht bei Wälzlagerdrehverbindungen an Windkraftanlagen die Gefahr, dass sie nach relativ kurzer Zeit durch Riffelbildung in den Laufbahnen ausfallen. Dieses Phänomen wird insbesondere durch geringe Schwenkbewegungen zum Ausgleich der Windrichtung erzeugt, bei der es zu einem Gleiten der Wälzkörper auf der Laufbahn kommt. Um diesen Verschleiß auszuschalten, ist es bekannt, durch verschiedene Maßnahmen den geringen Drehwiderstand bei Wälzlagern zu erhöhen. Die DE 37 25 972 A1 und die DE 41 04 137 A1 schlagen in diesem Zusammenhang vor, eine zusätzlich umlaufende Bremseinrichtung einzusetzen. Die Bremskraft und somit der gewünschte Drehwiderstand kann dann von außen eingestellt werden. Nachteilig dabei ist, dass im ersten Fall das Bremselement nur bei Stilllegung der Windkraftanlage aufgehoben werden kann. Im zweiten Fall besteht die Bremseinrichtung aus vielen mechanischen Einzelteilen und ist dadurch aufwändig zu fertigen und kompliziert in der Handhabung.

Aus der DE 19 04 954 B ist eine drehzapfenlose Drehverbindung für Bagger, Krane oder dergleichen zur Lagerung eines schwenkbaren Oberbaus auf einem Unterbau bekannt. Diese Drehverbindungen bestehen jeweils aus einem einteiligen Drehring sowie einem zweiteiligen, aus zwei Profilringen zusammengesetzten weiteren Drehring. Die beiden Drehringe sind jeweils durch die Kugeln eines zweireihigen Kugellagers gegeneinander abgestützt und mit einer Bremsvorrichtung ausgerüstet. Die Bremsvorrichtungen weisen jeweils einen oder mehrere Bremsklotzträger auf, die an einem mit dem einteiligen Drehring in Verbindung stehenden Bauteil befestigt sind. Bei dieser Anordnung ist von Nachteil, dass die Bremsvorrichtungen außerhalb der eigentlichen Lageranordnung angeordnet sind und daher zusätzlichen Bauraum beanspruchen.

Eine gattungsgemäße Lageranordnung mit Bremsfunktion ist aus der DE 101 27 487 A1 vorbekannt. Die Radiallageranordnung gemäß Figur 1 weist ein als Radiallager ausgebildetes Rillenkugellager auf und eine axial daneben angeordnete Bremseinrichtung. Das Rillenkugellager besteht aus dem Innenring, dem Außenring und zwischen beiden in einem Käfig angeordneten Lagerkugeln. Weiterhin verfügt das Rillenkugellager über zwei Dichtringe, die den Ringraum beidseitig gegen die Umgebung abdichten. Die Bremseinrichtung weist einen inneren Haltering und äußeren Haltering auf. An einem radial nach außen gerichteten Flansch des inneren Halteringes ist die über eine Flachdrahtfeder eine Bremsscheibe befestigt, die aus einem ferromagnetischen Material besteht und auf ihrer vom Flansch abgewandten Seite einen Bremsbelag besitzt. Durch die Befestigung mittels der Flachdrahtfeder ist die Bremsscheibe drehfest mit dem inneren Haltering verbunden und in Axialrichtung verschiebbar. Gegenüber dem Bremsbelag ist am äußeren Haltering eine Gegenfläche ausgebildet, gegen die der Bremsbelag beim Bremsen gepresst wird. Der äußere Haltering weist weiterhin eine elektrische Spule und einen oder mehrere Permanentmagneten auf, die jeweils im Bereich zwischen der Bremsscheibe und dem Rillenkugellager angeordnet und mechanisch mit dem äußeren Haltering und somit auch mit der Gegenfläche verbunden sind.

Nachteilig dabei ist, dass die Bremseinrichtung in axialer Richtung als externes Teil an das Lager angeflanscht werden muss und daher zusätzlichen Bauraum beansprucht. Die Halteringe sind relativ kompliziert aufgebaut und müssen erst in aufwendiger Weise durch Stifte mit den Lagerringen verbunden werden. Ein weiterer Nachteil ist dadurch begründet, dass die Bremswirkung durch einen Permanentmagneten ausgelöst wird, der die Bremsscheibe anzieht. Bei bestimmten Anwendungsfällen ist aber ein stetiges Magnetfeld nachteilig, da unter Umständen eisenhaltiger Schmutz vom Lager angezogen wird.

### Zusammenfassung der Erfindung

Der Erfindung liegt daher die Aufgabe zugrunde, die genannten Nachteile zu vermeiden und eine einfach zu fertigende Bremsvorrichtung bereitzustellen, die einen minimalen Bauraum beansprucht und eine dem jeweiligen Anwendungsfall angepasste Bremskraft realisiert.

Erfindungsgemäß wird diese Aufgabe nach dem kennzeichnenden Teil von Anspruch 1 in Verbindung mit dessen Oberbegriff dadurch gelöst, dass der Elektromagnet aus dem mit der Ankerplatte verbundenen Lagerring als Weicheisenkern und einer in diesem Lagerring als integraler Lagerbestandteil angeordneten Spule besteht, und dass die auf die Ankerplatte wirkende Federkraft variabel einstellbar ist.

Auf diese Weise ist eine Lageranordnung mit Bremseinrichtung geschaffen, bei der die Bremseinrichtung nahezu keinen zusätzlichen Bauraum benötigt, da sie integraler Bestandteil des Lagers ist. Durch Unterbringen des Bremselementes in einem der Lagerringe, im Normalfall im sich drehenden Lagerring, wird es auf diese Weise möglich, das Wälzlager mit Bremseinrichtung raumsparend zu realisieren. Ein weiterer Vorteil liegt darin, dass durch die Anordnung der Bremseinrichtung als integraler Wälzlagerbestandteil diese nicht in zusätzlicher und aufwändiger Weise mit der eigentlichen Lageranordnung zu verbinden ist.

Auch kann durch den Einsatz des Elektromagneten die Bremskraft problemlos aufgehoben werden, sodass in diesem Fall das Wälzlager leichtgängig bewegt werden kann. Ein derart gattungsgemäß ausgebildetes Wälzlager mit Bremseinrichtung lässt sich immer besonders dann vorteilhaft einsetzen, wenn ein stetig vorhandenes Reibmoment erwünscht ist, aber auch unter bestimmten Umständen sehr schnell ein Lösen dieses Reibmoments erzielt werden muss. Dies ist beispielsweise im medizinischen Bereich der Fall, wenn die Wälzlageranordnung in einer Drehverbindung eingesetzt wird, beispielsweise in einem Deckenstativ, das mit unterschiedlich ausgestalteten medizinischen Geräten verbunden ist. Dabei ist von Vorteil, dass durch das stetig vorhandene Reibmoment ein unerwünschtes Verdrehen der Drehverbindung einerseits unterbunden wird, andererseits die Drehverbindung aber durch Lösen der Bremseinrichtung leicht verstellbar ist. Im Notfall, wenn ein sofortiges Verdrehen beider Ringe gegeneinander erforderlich ist, muss dies auch mit wirkender Bremseinrichtung möglich sein. Vorteilhafterweise ist dabei die Bremskraft so einzustellen, dass eine Verdrehung der beiden Lagerringe gegeneinander durch menschliche Muskelkraft noch möglich ist.

Ein weiterer wesentlicher Vorteil der Erfindung liegt darin, dass ein integriertes, einstellbares Bremsenkonzept realisiert ist, welches individuell vom Endkunden bei der Montage der Lageranordnung angepasst werden kann. Da auf die Reibpaarung nach der Montage der Bremseinheit ebenso wenig wie auf die Anzahl der Druckfedern Einfluss genommen werden kann, stützt sich die vorliegende Erfindung auf die Einstellbarkeit der Federlänge, da diese proportional über die Federkonstante in die Federkraft eingeht. Damit werden für vielfache Anwendungen Federn gleicher geometrischer Abmessungen verwendbar, deren Federkraft aber nahezu beliebig einstellbar ist. Wie bekannt, wirkt die Federkraft auf den Reibbelag und definiert damit das Haltemoment der Lageranordnung. Anders ausgedrückt, das Haltemoment ist durch die Anzahl der Federn und deren Geometrie zunächst fest vorgegeben, ist aber durch die Stellung des Einstellringes variabel.

Weitere vorteilhafte Ausgestaltungen der Erfindung sind in den Unteransprüchen beschrieben.

So ist nach Anspruch 2 vorgesehen, dass das Bremselement aus einer ferromagnetischen Ankerplatte, einer Druckplatte und aus einer in einem der Lagerringe angeordneten Spule besteht, wobei zwischen Ankerplatte und Druckplatte ein Bremsbelag angeordnet ist, die mit einem der Lagerringe verbundene Ankerplatte über mehrere in Umfangsrichtung voneinander beabstandete Führungsstifte axial verschiebbar gehalten und über mehrere in Umfangsrichtung voneinander beabstandete Federelemente mit einer variablen Vorspannung beaufschlagbar ist, wobei die Federelemente auf einem in axialer Richtung frei bewegbaren kreisringartigen Einstellring abgestützt sind.

Wichtig ist hierbei eine gleichmäßige Veränderung der Federvorspannung, damit eine einseitige Überlastung, in Form der Überschreitung der Flächenpressung des Reibbelages vermieden wird. Dies ist durch den kreisringartigen Einstellring realisiert, der verschiebbar an einem der Lagerringe angeordnet ist und dadurch auf die Federenden axial einwirken kann, sodass deren Länge und damit deren Federkraft variabel ist.

Nach weiteren Merkmalen gemäß den Ansprüchen 3 und 4 ist vorgesehen, dass der Einstellring über ein Gewinde von einem zugehörigen Gewinde eines der Lagerringe aufgenommen ist und dass die Druckplatte über ein Gewinde von einem zugehörigen Gewinde eines der Lagerringe aufgenommen ist.

Durch diese beiden Maßnahmen ist es in einfacher Weise möglich, den Luftspalt des Elektromagneten zur Aufhebung der Bremskraft sehr genau einzustellen. Ist der Luftspalt zu gering eingestellt, so besteht die Gefahr, dass die Bremswirkung nicht aufgehoben wird, da der Bremsbelag nicht abhebt. Ist der Luftspalt hingegen zu groß, so wird das Magnetfeld geschwächt und der Elektromagnet muss unnötig groß ausgelegt werden. Andererseits kann durch die Verschiebung des Einstellringes stufenlos auf die Länge der Federn und damit auf die gewünschte Vorspannung eingewirkt werden.

Auch hat es sich nach einem weiteren zusätzlichen Merkmal der Erfindung gemäß Anspruch 5 als vorteilhaft erwiesen, wenn der Einstellring gegen ein unbeabsichtigtes Lösen durch Kleben, Kontern oder Verstiften gesichert ist. Nach dem Einstellvorgang ist somit dessen Verdrehen und damit eine unerwünschte Änderung der Bremskraft verhindert.

Nach einem anderen zusätzlichen Merkmal gemäß Anspruch 6 ist vorgesehen, dass die Wälzkörper als Kreuzrollen ausgebildet sind, deren Rollen mit annähernd quadratischem Querschnitt mit abwechselnd versetzten Achsen auf Laufbahnen abrollen. Der Vorteil dieser Anordnung liegt insbesondere darin, dass die abwechselnd angeordneten Wälzkörper in X-Anordnung auf den Laufbahnen abwälzen, sodass sich Belastungen aus allen Richtungen - Axial-, Radial- und Kippmomentbelastung - mit nur einem Kreuzrollenlager aufnehmen lassen.

Nach weiteren Merkmalen gemäß den Ansprüchen 7 und 8 ist vorgesehen, dass das Bremselement und die Wälzkörper durch ein in einem der Lagerringe angeordnetes Dichtelement getrennt sind, das vorzugsweise als eine schleifende Dichtung ausgebildet ist. Auf diese Weise ist realisiert, dass die Bremseinrichtung nicht mit von den Wälzkörpern stammendem Schmiermittel kontaktiert werden kann, was deren Wirkung wesentlich verschlechtern würde.

Nach einem weiteren Merkmal der Erfindung gemäß Anspruch 9 soll einer der Lagerringe an wenigstens einer Umfangsstelle mit einer radial verlaufenden Schmiermitteldurchtrittsbohrung versehen sein. Auf diese Weise wird eine besonders leichtgängige Verhaltensweise der Wälzlageranordnung durch eine wirkungsvolle Schmierung der Wälzkörper und deren Laufbahn realisiert. Schließlich soll nach einem letzten Merkmal der Erfindung das Wälzlager in medizinischen Geräten einsetzbar sein. Ein erstes Beispiel sind Deckenstative, die schon seit längerem bekannt sind und in der DE 36 27 517 A1, DE 43 06 803 A1 und DE 199 63 512 C1 beschrieben sind. Das in der letzten Vorveröffentlichung beschriebene Deckenstativ ist auch mit einer Bremseinrichtung versehen, die aus zwei Bremsringen besteht, welche die Lageranordnung radial von außen umschließen. Auch hier ist die Bremseinrichtung als zusätzlich zu fertigendes und außerhalb der eigentlichen Lagerung anzuordnendes Bauteil dargestellt, welches wiederum die im Stand der Technik aufgeführten Nachteile beinhaltet. Ein zweites Beispiel sind Patientenliegen oder Patiententische, die für ärztliche Untersuchungen durch Drehung der Tischplatte um eine vertikale Achse in Umfangsrichtung verschiedene Lagen einnehmen können. Dazu ist es erforderlich, dass die Tische an einem Ende über eine Drehverbindung sicher, aber beweglich abgestützt sind, da das andere Ende während der Verdrehung in Umfangsrichtung mehr oder weniger frei schwingt, d. h., nicht abgestützt ist.

Weitere Merkmale der Erfindung ergeben sich aus der nachfolgenden Beschreibung und aus den Zeichnungen, in denen ein Ausführungsbeispiel der Erfindung in vereinfachter Form dargestellt ist.

### Kurze Beschreibung der Zeichnungen

Es zeigen:
- Figur 1: eine Seitenansicht eines erfindungsgemäßen Wälzlagers,
- Figur 2: einen Längsschnitt entlang der Linie II-II in Figur 1,
- Figur 2a: einen Längsschnitt entlang der Linie II-II in Figur 1 in perspektivischer Darstellung,
- Figur 3: einen teilweisen Längsschnitt entlang der Linie III-III in Figur 1 und
- Figur 4: einen teilweisen Längsschnitt entlang der Linie IV-IV in Figur 1.

### Ausführliche Beschreibung der Zeichnungen

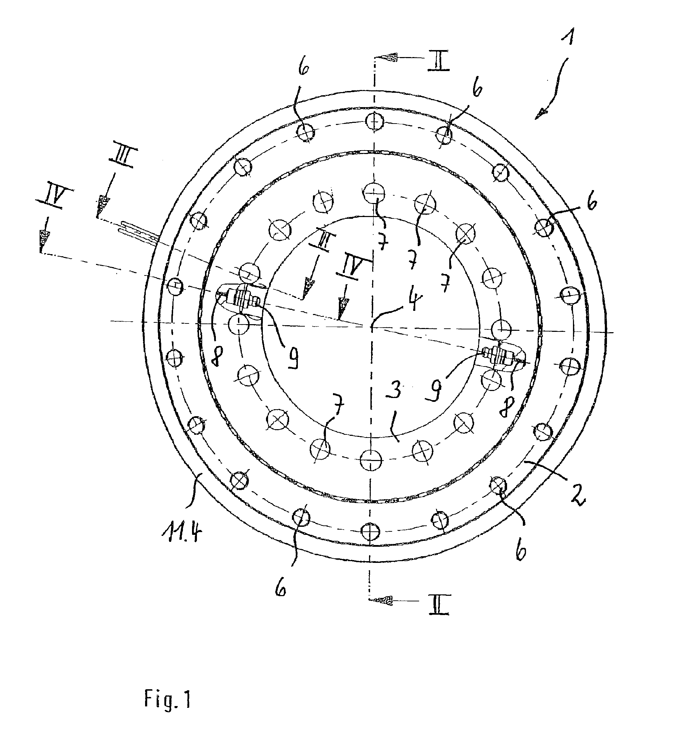

Das in den Figuren 1 bis 4 gezeigte erfindungsgemäß ausgestaltete Wälzlager 1 besteht aus dem Lageraußenring 2 und dem Lagerinnenring 3, die konzentrisch um die Lagerachse 4 ineinander angeordnet sind. Im zwischen beiden gebildeten nicht näher bezeichneten Ringraum sind Wälzkörper 5 in Form von Kreuzrollen untergebracht, deren Rollen mit annähernd quadratischen Querschnitt mit abwechselnd versetzter Achse auf nicht bezeichneten Laufbahnen abwälzen. Beide Lagerringe 2, 3 weisen Befestigungsbohrungen 6, 7 zur Verbindung mit nicht dargestellten Anschlusskonstruktionen auf. Wie auch erkennbar, ist der Lagerinnenring 3 an zwei gegenüberliegenden Umfangsstellen mit je einer radial verlaufenden Schmiermitteldurchtrittsbohrung 8 versehen, die in den die Wälzkörper 5 aufnehmenden Ringraum mündet und am anderen Ende durch je ein Schmiernippel 9 verschlossen ist. Lagerinnenring 3 und Lageraußenring 2 sind im oberen Bereich durch ein Dichtelement 10 verbunden, das in einer nicht bezeichneten Ausnehmung des Lagerinnenrings 3 fixiert ist und schleifend ausgebildet ist.

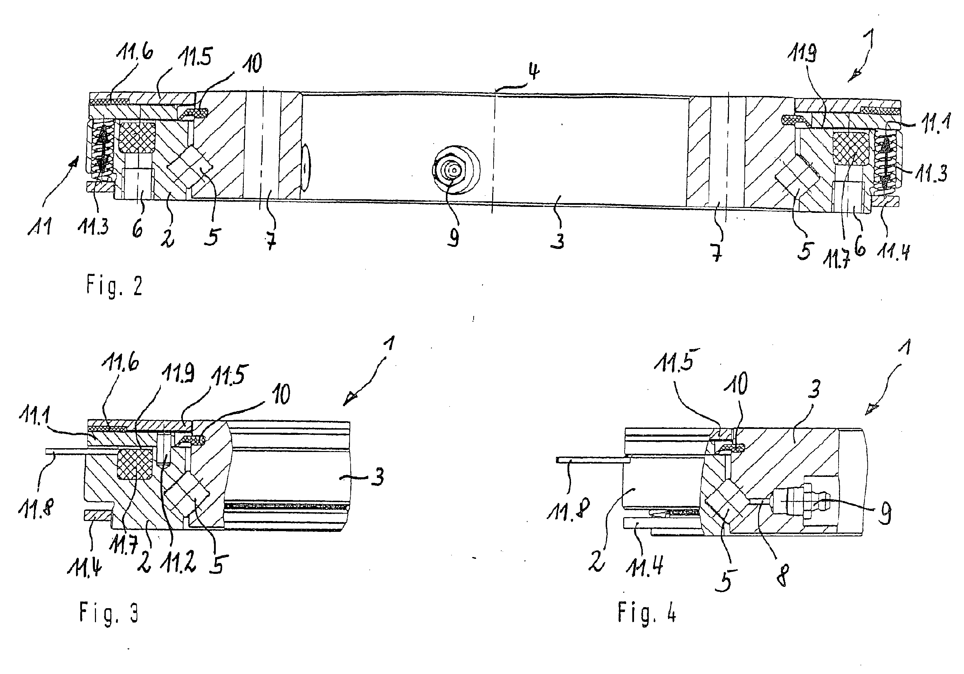

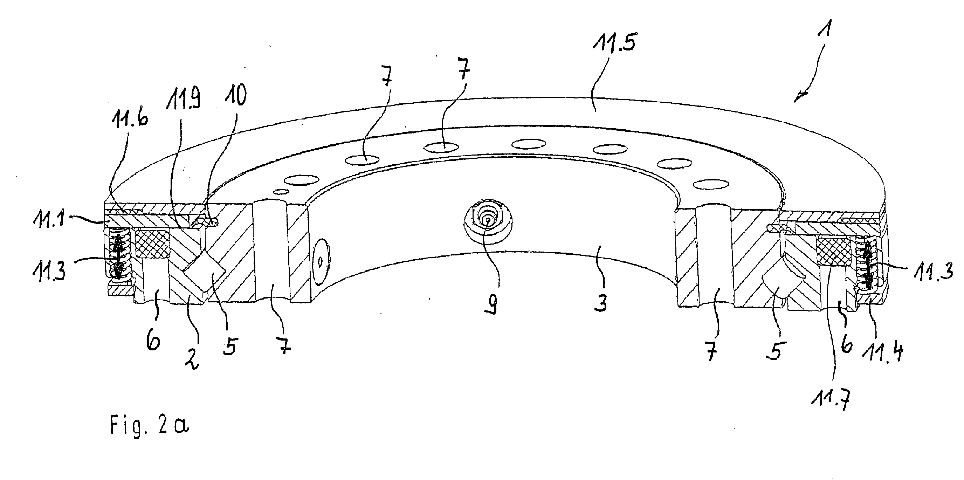

Das erfindungsgemäße Bremselement 11 besteht aus der ferromagnetischen Ankerplatte 11.1, die kreisringartig ausgebildet ist und mit mehreren in Umfangsrichtung voneinander beabstandeten Führungsstiften 11.2 im Lageraußenring 2 axial verschiebbar gehalten ist, wie Figur 3 zeigt. Die Führungsstifte 11.2 greifen in nicht näher bezeichnete Bohrungen der Ankerplatte 11.1 ein, wobei diese Bohrungen im Durchmesser etwas größer als die Durchmesser der Führungsstifte 11.2 sind. Wie aus den Figuren 2 und 2a erkennbar, ist die Ankerplatte 11.1 an mehreren gleichmäßig voneinander beabstandeten Umfangsstellen an einer Stirnseite von Federelementen 11.3 mit einer Axialkraft beaufschlagt. Die Federelemente 11.3 sind in einer nicht bezeichneten Bohrung des Lageraußenringes 2 aufgenommen und am der Ankerplatte 11.1 gegenüberliegenden Ende am kreisringartigen Einstellring 11.4 abgestützt. Der Einstellring 11.4 ist mit seinem nicht mit einem Bezugszeichen versehenen Innengewinde am Lageraußenring 2 über dessen ebenfalls nicht bezeichnetes Außengewinde in axialer Richtung verschiebbar gehalten. Zum Bremselement 11 gehört weiter die Druckplatte 11.5, die ebenfalls kreisringartig ausgebildet ist und über ihr nicht bezeichnetes Innengewinde am Lagerinnenring 3 über dessen nicht bezeichnetes Außengewinde gehalten ist. Zwischen Druckplatte 11.5 und Ankerplatte 11.1 ist der Bremsbelag 11.6 angeordnet, der im Ausführungsbeispiel fest mit der Druckplatte 11.5 verbunden ist. Wie weiter erkennbar, ist der Lageraußenring 2 mit einer nicht bezeichneten Ausnehmung versehen, in der die Spule 11.7 angeordnet ist, die mit der Zuleitung 11.8 versehen ist.

Im stromlosen Zustand der Spule 11.7 ist die Lageranordnung gebremst, d. h., der Lageraußenring 2 und der Lagerinnenring 3 sind reibschlüssig miteinander verbunden, da die mit dem Lageraußenring 2 verbundene Ankerplatte 11.1 über den Bremsbelag 11.6 durch die Federelemente 11.3 gegen die Druckplatte 11.5 gepresst ist, welche wiederum fest mit dem Lagerinnenring 3 verbunden ist. Beim Einleiten von Strom über die Zuleitung 11.8 in die Spule 11.7 wird durch das erzeugte Magnetfeld die Ankerplatte 11.1 in Richtung des Lageraußenringes 2 bewegt, sodass diese fest am Lageraußenring 2 anliegt und der Luftspalt 11.9 verschwunden ist, der ansonsten im stromlosen Zustand zwischen Ankerplatte 11.1 und dem Lageraußenring 2 gebildet ist. Wie insbesondere aus den Figuren 2 und 2a erkennbar, kann im stromlosen Zustand der Spule 11.7 der Luftspalt 11.9 durch die Druckplatte 11.5 sehr genau eingestellt werden, indem diese ihre axiale Positionierung durch Verdrehen gegenüber dem Lagerinnenring 3 ändert. Wie weiter erkennbar, wird auf die Einstellbarkeit der Länge der Federelemente 11.3 derart Einfluss genommen, indem diese durch ein Verdrehen der Position des Einstellringes 11.4 gegenüber dem Lageraußenring 2 mehr oder weniger zusammengepresst werden. Wie durch die in den Federelementen 11.3 eingezeichneten Pfeile verdeutlicht, ist deren Ausdehnung bzw. deren Zusammenpressen in axialer Richtung über ein Gewinde des Einstellringes 11.4 veränderbar. Dabei geht die Federlänge über die Federkonstante in die Federkraft ein, wobei die Federkraft mit einer axialen Verkürzung der Federelemente erhöht wird.

**Bezugszeichen**

| | |
|---|---|
| 1 | Wälzlager |
| 2 | Lageraußenring |
| 3 | Lagerinnenring |
| 4 | Lagerachse |
| 5 | Wälzkörper |
| 6 | Befestigungsbohrung |
| 7 | Befestigungsbohrung |
| 8 | Schmiermitteldurchtrittsbohrung |
| 9 | Schmiernippel |
| 10 | Dichtelement |
| 11 | Bremselement |
| | Ankerplatte |
| | Führungsstift |
| | Federelement |
| | Einstellring |
| | Druckplatte |
| | Bremsbelag |
| | Spule |
| | Zuleitung |
| | Luftspalt |

## Patentansprüche

1. Wälzlager (1) mit einer Bremseinrichtung, insbesondere Drehverbindung, bestehend aus einem Lageraußenring (2) und einem Lagerinnenring (3), zwischen denen auf zugehörigen Laufbahnen Wälzkörper (5) abrollen, und mit einem eine Ankerplatte (11.1), eine Druckplatte (11.5), Federelementen (11.3), die auf die Ankerplatte (11.1) wirken, und einen Elektromagneten umfassenden Bremselement (11), wobei zur Erzeugung einer Bremswirkung durch Reibschluss die mit einem der Lagerringe (2, 3) verbundene verschiebbare Ankerplatte (11.1) mittels der Federelemente (11.3) gegen die mit dem zugehörigen anderen Lagerring (3, 2) verbundene Druckplatte (11.5) gepresst ist und der Reibschluss mit Hilfe eines Elektromagneten aufhebbar ist, **dadurch gekennzeichnet, dass** der Elektromagnet aus dem mit der Ankerplatte (11.1) verbundenen Lagerring (2; 3) als Weicheisenkern und einer in diesem Lagerring (2; 3) als integraler Lagerbestandteil angeordneten Spule (11.7) besteht, und dass die auf die Ankerplatte (11.1) wirkende Federkraft variabel einstellbar ist.

2. Wälzlager (1) nach Anspruch 1, **dadurch gekennzeichnet, dass** die Ankerplatte (11.1) aus einem ferromagnetischen Werkstoff gebildete ist, dass zwischen Ankerplatte (11.1) und Druckplatte (11.5) ein Bremsbelag (11.6) angeordnet ist und dass die mit einem der Lagerringe (2, 3) verbundene Ankerplatte (11.1) über mehrere in Umfangsrichtung voneinander beabstandete Führungsstifte (11.2) axial verschiebbar gehalten und über mehrere in Umfangsrichtung voneinander beabstandete Federelemente (11.3) mit einer variablen Vorspannung beaufschlagbar ist, wobei die Federelemente (11.3) auf einem in axialer Richtung frei bewegbaren kreisringartigen Einstellring (11.4) abgestützt sind.

3. Wälzlager (1) nach Anspruch 2, **dadurch gekennzeichnet, dass** der Einstellring (11.4) über ein Gewinde von einem zugehörigen Gewinde eines der Lagerringe (2, 3) aufgenommen ist.

4. Wälzlager (1) nach Anspruch 2, **dadurch gekennzeichnet, dass** die Druckplatte (11.5) über ein Gewinde von einem zugehörigen Gewinde eines der Lagerringe (3, 2) aufgenommen ist.

5. Wälzlager (1) nach Anspruch 3, **dadurch gekennzeichnet, dass** der Einstellring (11.4) gegen ein unbeabsichtigtes Lösen durch Kleben, Kontern oder Verstiften gesichert ist.

6. Wälzlager (1) nach Anspruch 1, **dadurch gekennzeichnet, dass** die Wälzkörper (5) als Kreuzrollen ausgebildet sind, deren Rollen mit annähernd quadratischem Querschnitt mit abwechselnd versetzten Achsen auf Laufbahnen abrollen.

7. Wälzlager (1) nach Anspruch 1, **dadurch gekennzeichnet, dass** das Bremselement (11) und die Wälzkörper (5) durch ein in einem der Lagerringe (3, 2) angeordnetes Dichtelement (10) getrennt sind.

8. Wälzlager (1) nach Anspruch 7, **dadurch gekennzeichnet, dass** das Dichtelement (10) als eine schleifende Dichtung ausgebildet ist.

9. Wälzlager (1) nach Anspruch 1, **dadurch gekennzeichnet, dass** einer der Lagerringe (2, 3) an wenigstens einer Umfangsstelle mit einer radial verlaufenden Schmiermitteldurchtrittsbohrung (8) versehen ist.

10. Wälzlager (1) nach einem der vorhergehenden Ansprüche, **dadurch gekennzeichnet, dass** es in medizinischen Geräten einsetzbar ist.

## Claims

1. Roller bearing (1) having a braking device, in particular a rotating connection, comprising a bearing outer ring (2) and a bearing inner ring (3), between which roller bodies (5) roll on associated raceways, and having a braking element (11) comprising an armature plate (11.1), a pressure plate (11.5), spring elements (11.3) which act on the armature plate (11.1), and an electromagnet, wherein the armature plate (11.1), which can be moved and is connected to one of the bearing rings (2, 3), is pressed by means of the spring elements (11.3) against the pressure plate (11.5), which is connected to the associated other bearing ring (3, 2), by a friction lock in order to produce a braking effect, and the friction lock can be cancelled with the aid of an electromagnet, **characterized in that** the electromagnet comprises the bearing ring (2; 3) connected to the armature plate (11.1) as a soft-iron core, and a coil (11.7) arranged as an integral bearing component in said bearing ring (2; 3), and **in that** the spring force acting on the armature plate (11.1) is variably adjustable.

2. Roller bearing (1) according to Claim 1, **characterized in that** the armature plate (11.1) is made from a ferromagnetic material, **in that** a brake lining (11.6) is arranged between the armature plate (11.1) and the pressure plate (11.5) and **in that** the armature plate (11.1) which is connected to one of the bearing rings (2, 3), is held, such that it can move axially, via a plurality of guide pins (11.2) which are separated from one another in the circumferential direction, and a variable prestress can be applied to it via a plurality of spring elements (11.3) which are separated from one another in the circumferential direction, wherein the spring elements (11.3) are supported on an annular adjusting ring (11.4), which can move freely in the axial direction.

3. Roller bearing (1) according to Claim 2, **characterized in that** the adjusting ring (11.4) is held via a thread by an associated thread on one of the bearing rings (2, 3).

4. Roller bearing (1) according to Claim 2, **characterized in that** the pressure plate (11.5) is held via a thread by an associated thread on one of the bearing rings (3, 2).

5. Roller bearing (1) according to Claim 3, **characterized in that** the adjusting ring (11.4) is secured against inadvertent release by adhesive bonding, locknuts or pins.

6. Roller bearing (1) according to Claim 1, **characterized in that** the roller bodies (5) are in the form of cross-rollers, whose rollers roll with an approximately square cross section, with alternately offset axes, on raceways.

7. Roller bearing (1) according to Claim 1, **characterized in that** the braking element (11) and the roller bodies (5) are separated by a sealing element (10) which is arranged in one of the bearing rings (3, 2).

8. Roller bearing (1) according to Claim 7, **characterized in that** the sealing element (10) is in the form of a sliding seal.

9. Roller bearing (1) according to Claim 1, **characterized in that** one of the bearing rings (2, 3) is provided at at least one circumferential point with a radially running lubricant through-hole (8).

10. Roller bearing (1) according to one of the preceding claims, **characterized in that** the roller bearing can be used in medical appliances.

## Revendications

1. Palier à roulement (1) comprenant un système de freinage, en particulier joint rotatif, constitué d'une bague de palier extérieure (2) et d'une bague de palier intérieure (3) entre lesquelles des corps de roulement (5) roulent sur des pistes de roulement associées, et comprenant un élément de freinage (11) comprenant une plaque d'induit (11.1), une plaque de pression (11.5), des éléments de ressort (11.3) qui agissent sur la plaque d'induit (11.1), et un électroaimant, la plaque d'induit (11.1) déplaçable connectée à l'une des bagues de palier (2, 3) étant pressée au moyen des éléments de ressort (11.3) contre la plaque de pression (11.5) connectée à l'autre bague de palier (3, 2) associée pour la production d'un effet de freinage par engagement par friction, et l'engagement par friction pouvant être supprimé à l'aide d'un électroaimant, **caractérisé en ce que** l'électroaimant se compose de la bague de palier (2 ; 3) connectée à la plaque d'induit (11.1) en tant que noyau de fer doux et d'une bobine (11.7) disposée sous forme de constituant intégral du palier dans cette bague de palier (2 ; 3), et **en ce que** la force de ressort agissant sur la plaque d'induit (11.1) peut être ajustée de manière variable.

2. Palier à roulement (1) selon la revendication 1, **caractérisé en ce que** la plaque d'induit (11.1) est formée d'un matériau ferromagnétique, **en ce qu'**entre la plaque d'induit (11.1) et la plaque de pression (11.5) est disposée une garniture de frein (11.6) et **en ce que** la plaque d'induit (11.1) connectée à l'une des bagues de palier (2, 3) est maintenue de manière déplaçable axialement par le biais de plusieurs goupilles de guidage (11.2) espacées les unes des autres dans la direction périphérique et peut être sollicitée avec une précontrainte variable par le biais de plusieurs éléments de ressort (11.3) espacés les uns des autres dans la direction périphérique, les éléments de ressort (11.3) étant supportés sur une bague d'ajustement (11.4) de type bague circulaire librement déplaçable dans la direction axiale.

3. Palier à roulement (1) selon la revendication 2, **caractérisé en ce que** la bague d'ajustement (11.4) est reçue par le biais d'un filetage par un filetage associé de l'une des bagues de palier (2, 3).

4. Palier à roulement (1) selon la revendication 2, **caractérisé en ce que** la plaque de pression (11.5) est reçue par le biais d'un filetage par un filetage associé de l'une des bagues de palier (3, 2).

5. Palier à roulement (1) selon la revendication 3, **caractérisé en ce que** la bague d'ajustement (11.4) est fixée contre un desserrage accidentel par collage, blocage par contre-écrou, ou fixation par goujons.

6. Palier à roulement (1) selon la revendication 1, **caractérisé en ce que** les corps de roulement (5) sont réalisés sous forme de rouleaux croisés, dont les rouleaux ayant une section transversale approximativement quadratique avec des axes décalés en alternance roulent sur des pistes de roulement.

7. Palier à roulement (1) selon la revendication 1, **caractérisé en ce que** l'élément de freinage (11) et les corps de roulement (5) sont séparés par un élément d'étanchéité (10) disposé dans l'une des bagues de palier (3, 2).

8. Palier à roulement (1) selon la revendication 7, **caractérisé en ce que** l'élément d'étanchéité (10) est réalisé sous forme de joint d'étanchéité abrasif.

9. Palier à roulement (1) selon la revendication 1, **caractérisé en ce que** l'une des bagues de palier (2, 3) est pourvue d'un alésage (8) pour le passage de lubrifiant s'étendant radialement au niveau d'au moins un emplacement périphérique.

10. Palier à roulement (1) selon l'une quelconque des revendications précédentes, **caractérisé en ce qu'**il peut être utilisé dans des appareils médicaux.
